# EUROPEAN PATENT APPLICATION

(11) **EP 1 429 179 A1**
(43) Date of publication of application: **16.06.2004**
(21) Application number: 02080222.9
(22) Date of filing: 09.12.2002
(51) Int. Cl.: G02F 2/00, G02F 1/35

(54) **Method of and device for optical wavelength conversion**

(71) Applicant: TECHNISCHE UNIVERSITEIT EINDHOVEN, 5612 AZ Eindhoven (NL)
(72) Inventor: Van Der Tol, Johannes Jacobus Gerardus Maria, 5709 LL Helmond (NL); Hanfoug, Rabah, 5654 BV Eindhoven (NL)
(74) Representative: Dorna, Peter

(57) **Abstract**

Method of and device for optical wavelength conversion of an optical input signal (2) of a first wavelength into an optical output signal (24) of a second wavelength, wherein an optical probe signal (7,8) of the second wavelength having a first polarisation is coupled into at least a first and a second interferometer (16,17). The input signal is split (3) into first and second signal components having the first and second polarisation. The first polarisation of the first input signal component is converted (4) into the second polarisation. The first input signal component is coupled into the first interferometer (16) providing a first converted signal (12) and the second input signal component is coupled into the second interferometer (17) providing a second converted signal. The first and second converted signals are filtered to provide first and second converted signal components of the first polarisation. The first polarisation of the second converted signal component is converted (21) into the second polarisation, and the first and second converted signal components are combined (22) providing the output signal.

## Description

The present invention relates generally to optical signal processing and devices, and more specifically to a method of and device for optical wavelength conversion of an optical input signal of a first wavelength into an optical output signal of a second wavelength, using at least a first and a second interferometer.

The present invention further relates to an optical add-drop multiplexing/demultiplexing arrangement, an optical switching arrangement and an optical integrated circuit for optical wavelength conversion.

For wavelength routed optical networks, a compact and monolithically integration of components which can provide all-optical wavelength conversion is highly needed. It increases the flexibility of networks by offering a dynamic exchange of signals between different wavelengths. Interferometric wavelength converters based on cross phase modulation (XPM) by using Semiconductor Optical Amplifiers (SOA) as nonlinear element seems to be the most promising. They are compact, stable, provide a low chirp and a high extinction ratio. In practical configurations, SOAs are provided in a standard Mach Zehnder Interferometer (MZI).

In prior art optical wavelength converters, swapping of the wavelength is produced by launching the new wavelength (the probe) coming from a CW laser equally in the two arms of an MZI. Simultaneously, the old wavelength (the control signal) is introduced in one of the arms of the MZI in such a way that a phase difference between the two arms can be obtained at the output of the MZI. Co-directional coupling (the two signals propagate in the same direction through the MZI) at high speed provides a better performance (higher extinction ratio (ER), larger input dynamic range) than counter-directional propagation, because the interaction time between the two signals in the SOA is longer. Also co-propagation provides a higher optical signal to noise ratio compared to counter-propagation.

A disadvantage of using co-propagation (co-directional) coupling is that tunable filters are needed at the output of the wavelength converter in order to separate the control and data signals.

These filters introduce losses and modify the pulse form of the signals. They are difficult to integrate and are expensive. Conversion to the same wavelength is impossible. This latter option is desirable to keep full flexibility, to provide implicit regeneration in the wavelength converter and to strip the frequency and phase noise from the control data signal.

A counter propagation configuration may be used in order to avoid the above-mentioned problem, however the counter propagation configuration suffers from the disadvantages mentioned above and is therefore not the best solution for the above-mentioned problems.

In addition, since the signal in the network has an unknown state of polarisation, polarisation insensitive wavelength converters are required. This may be achieved by using polarisation insensitive SOAs, however this will limit the design options for these devices and will add to the total costs of the device.

Accordingly, it is an object of the present invention to provide a co-directional polarisation insensitive SOA-based optical wavelength converter, providing implicitly filtering of an optical input signal and allowing conversion to the same wavelength.

These and other objects are achieved in a first aspect of the present invention by providing a method for optical wavelength conversion of an optical input signal of a first wavelength into an optical output signal of a second wavelength, wherein an optical probe signal of the second wavelength having a first polarisation is coupled into at least a first and a second interferometer,
the optical input signal is split into a first input signal component having the first polarisation and a second input signal component having a second polarisation,
the first polarisation of the first input signal component is converted into the second polarisation,
the first input signal component is coupled into the first interferometer providing a first interfered probe signal and the second input signal component is coupled into the second interferometer providing a second interfered probe signal,
the first and the second interfered probe signals are filtered for providing first and second interfered probe signal components of the first polarisation,
the first polarisation of the second interfered probe signal component is converted into the second polarisation, and
the first and second interfered probe signal components of the first and second polarisation are combined providing the output signal.

By splitting the optical input signal in signal components of a different polarisation, and subsequently processing the signal by interfering with a probe signal, a polarisation insensitive co-propagation wavelength conversion is achieved, allowing the use of polarisation sensitive SOAs.

A further advantage of the method according to the invention is that by polarisation filtering after the interaction between the probe signal and both the input signal components in the interferometers, the input signal can be effectively filtered from the interfered probe signal components, coming out of the interferometers. Note that both the first and the second interfered probe signal components comprise a similar polarisation (the first polarisation) after leaving the filters. Therefore in order to establish a resultant output signal, one of the interfered probe signal components has to be converted to the second polarisation, after which the first and the second interfered probe signal components can be combined for forming an output signal of the second wavelength.

In a possible embodiment of the present invention, the first and second input signal components of the second polarisation are filtered for removing therefrom optical waves with a first polarisation.

The advantage of this embodiment is that best results are achieved when input signal components of a single polarisation type are coupled into the interferometer for interaction with the probe signal. Note that any remaining optical waves of a first polarisation that may be present in the input signal components can not be filtered from the interfered probe signal leaving the interferometer. This embodiment of the invention therefore provides clear benefits with respect to effectively converting the wavelength and lessen the quality requirements of the optical conversion and splitting means.

Another embodiment of the present invention provides a method wherein the probe signal and the first and the second input signal components of the second polarisation are coupled into a Mach-Zehnder Interferometer (MZI), in particular a Semiconducter Optical Amplifier based Mach-Zehnder Interferometer (SOA-MZI).

The use of Mach-Zehnder Interferometers is particularly applicable in the field of high speed optical signal conversion, and therefore in modern telecommunications optical networks.

A second aspect of the invention provides a device for optical wavelength conversion of an optical input signal of a first wavelength into an optical output signal of a second wavelength, comprising:
means for providing an optical probe signal having a second wavelength and a first polarisation,
polarisation splitter means for splitting the optical input signal into a first input signal component having the first polarisation and a second input signal component having a second polarisation,
polarisation conversion means for converting the first polarisation of the first input signal component into the second polarisation,
a first interferometer for receiving the first input signal component and the probe signal, arranged for providing a first interfered probe signal,
a second interferometer for receiving the second input signal component and the probe signal, arranged for providing a second interfered probe signal,
polarisation filter means arranged for filtering the first and the second interfered probe signals, providing first and second interfered probe signal components of the first polarisation,
polarisation conversion means for converting the first polarisation of the second interfered probe signal component into the second polarisation, and
means for combining the first and second interfered probe signal components of the first and second polarisation into the optical output signal.

Such a device is of a relatively simple design and can be produced cost effectively.

A specific embodiment of this device comprises an integrated polarisation splitter, such as the one described in Dutch patent application no. 100182 filed on April 20, 1995, which is incorporated herein by reference.

Advantageously, polarisation conversion in the device mentioned above can be performed using a integrated optical polarisation converter such as the one described in U.S. Patent Application no. 5,539,845 "Integrated optical polarisation converter with enhanced periodic coupling and method of fabricating same", and is incorporated herein by reference. Further an optical waveguide converter may be used such as the one described in U.S. Patent no. 5,185,828 which is herein incorporated by reference as well.

The invention further relates to an optical add-drop multiplexing/demultiplexing arrangement, an optical switching arrangement and a integrated circuit comprising a device as described above.

The invention is particularly suitable for use in optical telecommunication arrangements as described above.

The present invention will now be further elucidated by a description and drawings referred to a preferred embodiment thereof. The invention is not limited to the embodiments disclosed which are provided for explanatory purposes only.

### Description of the figures

Figure 1 shows a block diagram of an embodiment of a device according to the present invention.
Figure 2 shows a graph of the bit error rate for signal conversion of various signals with different polarisations and at various input power values.
Figure 3 shows a graph of the quality factor versus the received input power for different polarisations.
Fig. 4 shows a graph of the Extinction Ratio (ER) as a function of the input power of the optical signal for different polarities.

### Detailed description of the embodiment

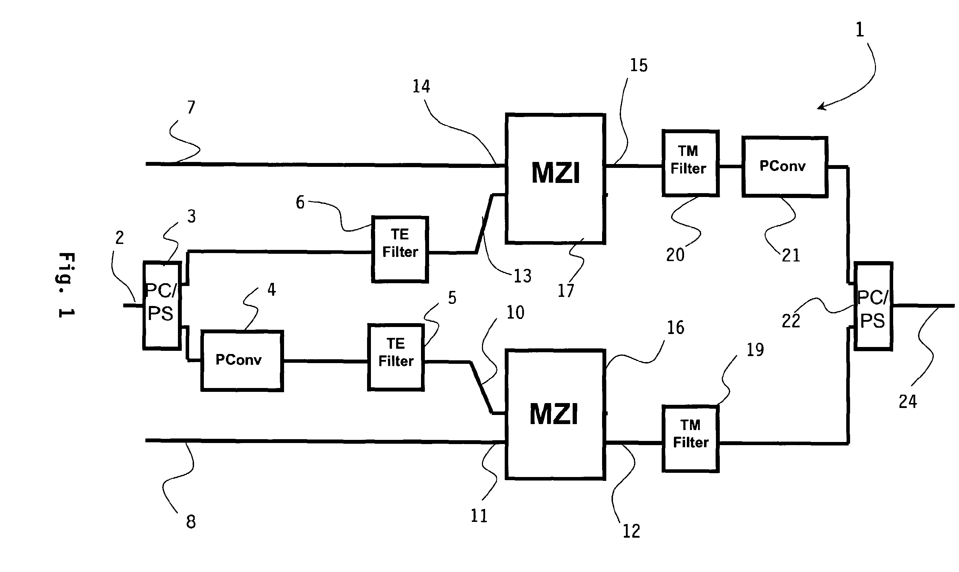

In Fig. 1, an optical signal wavelength converter 1 according to the present invention is shown, comprising an optical input channel 2 for receiving optical input signals of a first wavelength with arbitrary polarisation. The optical input signal passes an optical polarisation splitter 3, which splits the input signal in two branches, each branch carrying a specific input signal component polarisation. An optical probe signal of a second wavelength with a specific polarisation is provided at two further optical input channels 7 and 8 of the device.

Assume that the probe signal at the input channels 7 and 8 is provided by a Continuous Wave (CW) laser (not shown) and is polarised in the Transverse Magnetic (TM) mode.

With reference to fig. 1, the arrangement is such that the upper branch coming from the polarisation splitter 3 carries an input signal component which is substantially polarised in a polarisation direction which is perpendicular to the polarisation of the probe signal at the input channels 7 and 8, i.e. a Transverse Electric (TE) mode. The lower branch of the polarisation splitter 3 then carries an optical input signal component with a TM-polarisation, like the polarisation of the probe signal at the input channels 7 and 8.

It is important that the input signal components in the two branches behind the polarisation splitter 3, before they will be coupled into the Mach-Zehnder Interferometers 16 and 17, preferably Semiconducter Optical Amplifier based Mach-Zehnder Interferometers (SOA-MZIs), have a polarisation which is perpendicular to the polarisation of the probe signal at the input channels 7 and 8 of the device. To this end, an optical polarisation converter 4 is provided in the lower branch behind the optical polarisation splitter 3, to convert the TM-polarisation of the respective input signal component into TE-polarisation.

Optionally, optical polarisation filters 5 and 6 may be provided which will only pass the transverse electric modes (TE-modes) of the input signal components in the two branches between the polarisation splitter 3 and the interferometers 16 and 17.

At the Mach-Zehnder Interferometer 16, comprising input channels 10 and 11, the input signal component of the lower branch of the polarisation splitter 3 is coupled into input channel 10 while input channel 11 of the interferometer receives the probe signal coming from input channel 8 of the device. A mixed (or interfered) signal comprising the interfered probe signal and the input signal component coupled into the interferometer 16 leaves the interferometer at output channel 12 thereof, and is coupled into an optical filter 19, which only passes the TM-mode of the optical signal leaving the interferometer 16. The TM filter 19 passes the TM mode of that signal, providing the interfered probe signal of the second wavelength that comprises the information carried by the optical input signal received at the input channel 2 of the device 1. In the case of ideal components, at the output channel of the TM-filter 19 only the interfered probe signal of the second wavelength is present.

Similarly, for the input signal component in the upper branch after the polarisation splitter 3, the filtered input signal component is coupled into input channel 13 of the interferometer 17 and interferes with the probe signal which is received at input channel 14 of the interferometer 17. This provides a mixed signal at output channel 15 of the interferometer 17, which comprises the interfered probe signal and the input signal component. Assuming ideal optical components, the TM filter 20 only passes the TM mode of that signal, providing the interfered probe signal of the second wavelength that comprises the information carried by the optical input signal, received at input channel 2 of the device 1.

For constructing the output signal of the second wavelength carrying the information of the input signal, the polarisation of the signal leaving the filter 20 is converted to a TE-mode by an optical polarisation converter 21, after which both interfered probe signals from the upper and lower branch of the device 1 are combined using an optical polarisation combiner 22. At the output channel 24 of the device the optical output signal of the required second wavelength is now provided.

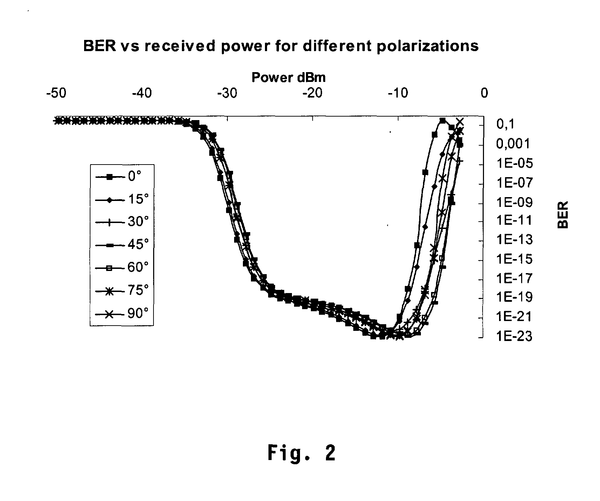

In Figure 2, the bit error rate (BER) versus input power for different polarisations of the incoming optical signal is presented. It is clear from the curves shown, that this configuration shows a wide input power operation range, giving a sufficiently low BER compared to the satndard of 10⁻¹², despite the change in polarisation and the power of the input signal. When the line width enhancement factor (of the SOAs) and the polarisation efficiency (of the polarisation splitters and converters) are increased, it has been observed that the curves shown will shift to lower powers. This feature may be used for design purposes in applications using the present invention.

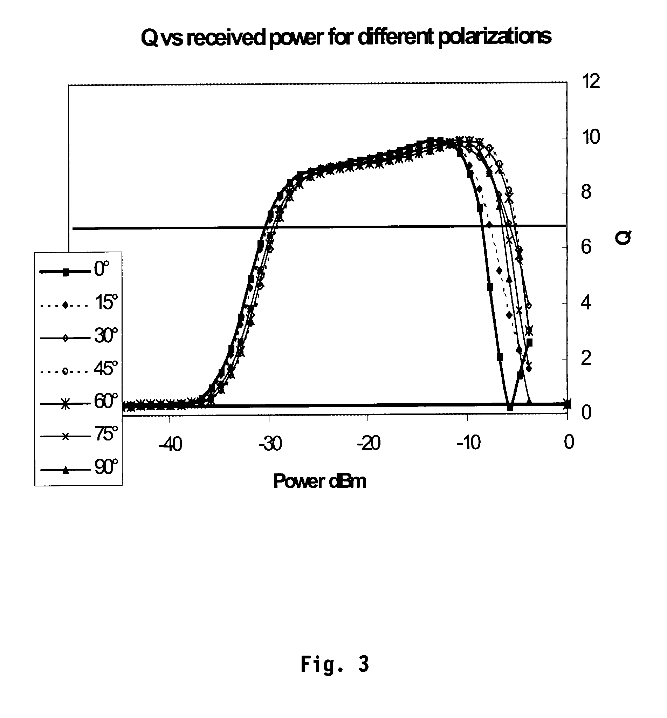

Fig. 3 shows the quality factor Q as a function of the input power of the optical input signal for different polarisations. A minimum required quality factor (Q) of seven is easily achieved in the operation range indicated by the curves shown.

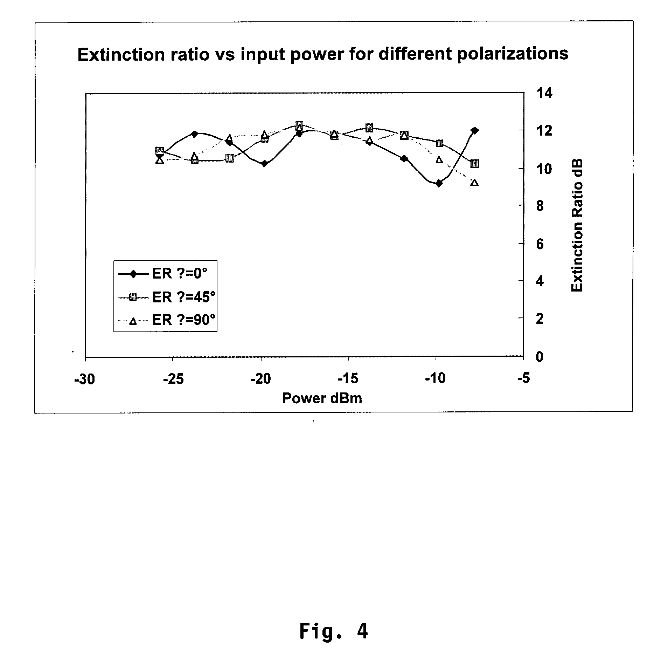

Fig. 4 shows the Extinction Ratio (ER) as a function of the input power of the optical signal for different polarities. The input extinction ratio is 7 dB. These results are obtained after adding TE filters 5 and 6 (as shown in Fig. 1). From Fig. 4 the additional benefit from using these polarization components can be clearly seen, i.e. improving the extinction ration, which is very important for cascading wavelength converters in a network.

For the purpose of comprehensiveness it is noted here that numerous modifications and variations of the present invention are possible in the light of the above teachings. It is therefore understood that, within the scope of the amended claims, the invention may be practised otherwise then specifically described herein.

## Claims

1. Method for optical wavelength conversion of an optical input signal of a first wavelength into an optical output signal of a second wavelength, wherein an optical probe signal of said second wavelength having a first polarisation is coupled into at least a first and a second interferometer,
said optical input signal is split into a first input signal component having said first polarisation and a second input signal component having a second polarisation,
said first polarisation of said first input signal component is converted into said second polarisation,
said first input signal component is coupled into said first interferometer providing a first interfered probe signal and said second input signal component is coupled into said second interferometer providing a second interfered probe signal,
said first and said second interfered probe signals are filtered for providing first and second interfered probe signal components of said first polarisation,
said first polarisation of said second interfered probe signal component is converted into said second polarisation, and
said first and second interfered probe signal components of said first and second polarisation are combined providing said output signal.

2. Method according to claim 1, wherein said first and second input signal components of said second polarisation are filtered for removing therefrom optical waves with a first polarisation.

3. Method according to any of the previous claims, wherein said probe signal and said first and said second input signal components of said second polarisation are coupled into a Mach-Zehnder Interferometer (MZI), in particular a Semiconducter Optical Amplifier (SOA) based Mach-Zehnder Interferometer (MZI).

4. Method according to any of the previous claims, wherein said second wavelength is equal to said first wavelength.

5. Method according to any of the previous claims, wherein said first polarisation is a transverse electric mode (TE-mode) of said optical signal and said second polarisation is a transverse magnetic mode (TM-mode) of said optical signal.

6. Method according to any of the claims 1-4, wherein said first polarisation is a transverse magnetic mode (TM-mode) of said optical signal and said second polarisation is a transverse electric mode (TE-mode) of said optical signal.

7. Device for optical wavelength conversion of an optical input signal of a first wavelength into an optical output signal of a second wavelength, comprising:
means for providing an optical probe signal having a second wavelength and a first polarisation,
polarisation splitter means for splitting said optical input signal into a first input signal component having said first polarisation and a second input signal component having a second polarisation,
polarisation conversion means for converting said first polarisation of said first input signal component into said second polarisation,
a first interferometer for receiving said first input signal component and said probe signal, arranged for providing a first interfered probe signal,
a second interferometer for receiving said second input signal component and said probe signal, arranged for providing a second interfered probe signal,
polarisation filter means arranged for filtering said first and said second interfered probe signals, providing first and second interfered probe signal components of said first polarisation,
polarisation conversion means for converting said first polarisation of said second interfered probe signal component into said second polarisation, and
means for combining said first and second interfered probe signal components of said first and second polarisation into said optical output signal.

8. Device according to claim 7, comprising further filter means for removing optical waves with said first polarisation from said first and second input signal components having said second polarisation.

9. Device according to any of the claims 7 and 8, wherein said first and said second interferometer are Mach-Zehnder Interferometers (MZI).

10. Device according to claim 9, wherein said Mach-Zehnder Interferometers are Semiconductor Optical Amplifier (SOA) based Mach-Zehnder Interferometers (MZI).

11. Device according to any of the claims 7-10, wherein said polarisation splitter means is an integrated polarisation splitter.

12. Device according to any of the claims 7-11, arranged for use in an optical network arrangement.

13. Optical add-drop multiplexing/demultiplexing arrangement comprising a device according to any of the claims 7-11.

14. Optical switching arrangement comprising a device according to any of the claims 7-11.

15. Integrated circuit comprising a device according to any of the claims 7-11.
